# EUROPÄISCHE PATENTSCHRIFT

(11) **EP 0 593 393 B1**
(45) Veröffentlichungstag und Bekanntmachung des Hinweises auf die Patenterteilung: **06.11.1996**
(21) Anmeldenummer: 93810685.3
(22) Anmeldetag: 28.09.1993
(51) Int. Cl.: B01D 53/84, A01G 9/00

(54) **Biologischer Luftfilter**
Biological air filter
Filtre d'air biologique

(30) Priorität: 16.10.1992 CH 3222/92
(43) Veröffentlichungstag der Anmeldung: 20.04.1994
(73) Patentinhaber: INTERHYDRO AG, CH-3112 Allmendingen (CH)
(72) Erfinder: Jutzi, Eduard, CH-3014 Bern (CH)
(74) Vertreter: Feldmann, Clarence Paul

(56) Entgegenhaltungen:
- WO-A-93/02716
- DE-U- 8 610 739
- GB-A- 2 263 381
- US-A- 4 213 271
- Interior Landscape Plants For Indoor Air Pollution Abatement, Final Report - Sept. 1989, B.C. Wolverton, Anne Johnson und Keith Bounds, NASA Bericht MS 39529-6000

## Beschreibung

Die Erfindung betrifft einen biologischen Luftfilter nach dem Oberbegriff des unabhängigen Patentanspruches.

Viele bisher gebräuchliche Luftreinigungs- und Befeuchtungsgeräte funktionieren auf rein physikalischen oder physikalisch-chemischen Verfahren mit entsprechenden, meist teuren, Filterelementen. Diese trockenen oder nassen Filtersysteme sind oft ein idealer Nährboden für die verschiedensten Keime. Eine mehr oder weniger turbulente Luftbewegung am Ausgang sorgt zudem für ein Mitreissen von Keimen und deren Abgabe in die Raumluft.

Aus "Interior Landscape Plants For Indoor Air Pollution Abatement", Final Report-Sept 1989, B.C. Wolverton, Anne Johnson und Keith Bounds, NASA Bericht MS 39529-6000, ist bekannt, dass Pflanzen über ihre Blätter und Wurzeln verschiedene Luftschadstoffe aufnehmen und metabolisieren können. Pflanzen, die in einem Substrat wachsen, das Aktivkohle enthält, können diese, wenn sie mit Schadstoffen belastet ist, mittels ihrer Wurzeln durch sogenannte Bioregeneration wieder regenerieren und die Schadstoffe biochemisch und mit Hilfe der Bodenbakterien in sich aufnehmen. Die Bodenbakterienflora ist zudem im Stande, eventuell anfallende pathogene Keime zu vernichten. Es wird ein Pflanzengefäss beschrieben, in welchem Pflanzen auf Aktivkohle wachsen. Das Gefäss ist auf einem Behälter montiert, in welchem ein Ventilator installiert ist, welcher Luft durch den luftdurchlässigen, aber nicht wasserdurchlässigen Boden des Gefässes nach oben, durch das aktivkohlehaltige Substrat hindurch bläst. Es ist ein System vorgesehen, welches überflüssiges Wasser aus dem Pflanzengefäss in eine Ueberlaufgefäss ableitet.

Aus DE 43 09 979 (Sautf, H.) ist eine Vorrichtung zum Reinigen und Befeuchten von Luft bekannt, bei welcher ein Pflanzenbehälter mit einem Lüfter versehen ist. Dabei wird luft über ein Luftventeilelement mit einer Anzahl Oeffnungen direkt im erdhaltiges Substrat eingeblasen.

Aufgabe der Erfindung ist, unter Verwendung dieser Kenntnisse, einen biologischen Luftfilter zu schaffen, der Raumluft in Gebäuden befeuchtet und von Staub befreit und Schadstoffe durch Bioregeneration entfernt oder reduziert und diese abbaut.

Die Aufgabe wird durch den biologischen Luftfilter gemäss den Patentansprüchen gelöst, indem Raumluft aktiv durch ein Substrat, in welchem Pflanzen wachsen, zirkuliert.

Der biologische Luftfilter wird nachstehend im Zusammenhang mit den Figuren beschrieben. Dabei zeigen:
- Figur 1: den ganzen erfindungsgemässen Luftfilter und
- Figur 2: eine Filterelement in perspektivischer Ansicht.

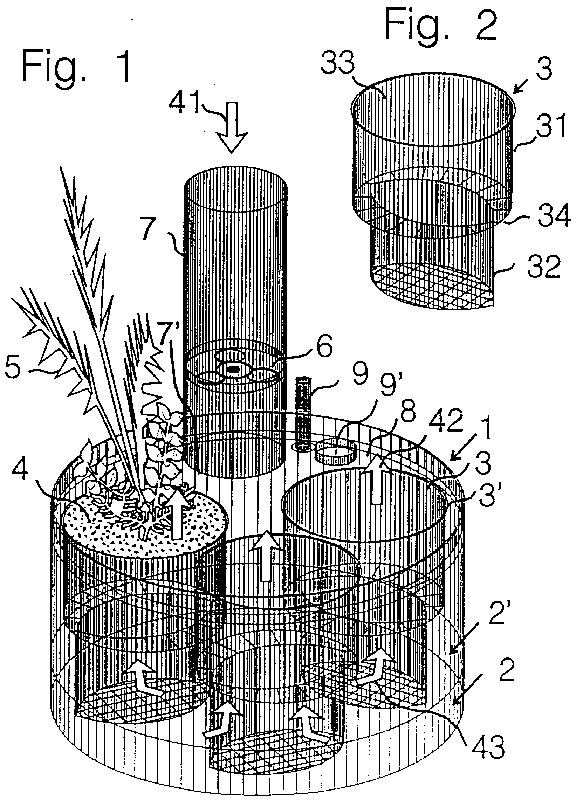

Der biologische Luftfilter nach Figur 1 kann modular aufgebaut sein. Möglich sind Ausführungen als Einzelgeräte oder ein Einbau in bereits bestehende Zimmerpflanzen- Arrangements nach dem Hydrokultursystem. Er besteht aus einem grösseren beliebig geformten topfförmigen Filtergehäuse 1. Dieses weist einen unteren Bereich 2, welcher mit Wasser gefüllt wird, und einen oberen Bereich 2', welcher als Befeuchtungsraum mit Luft in aktiver Zirkulation gefüllt ist, auf. Es ist oben mit einer dichtenden Abdeckung 8 versehen, welche mit Oeffnungen 3',7' zur dichtenden Aufnahme von einem oder mehreren Filterelementen 3 versehen ist. Bei einer Ausführungsform mit nur einem Filterelement 3 kann dieses selbst als dichtende Abdeckung 8 des Gefässes 1 ausgestaltet sein. Die Filterelemente 3 sind mit geeignetem Substrat 4 und/oder mit Aktivkohle gefüllt. In diesen Filterelementen 3 wachsen die gewünschten Pflanzen 5. Für Mittel zum Ansaugen und Einblasen von Luft aus der Umgebung ist in der Abdeckung 8 eine weitere Oeffnung vorgesehen. Durch diese kann Luft z. B. mittels eines Ventilators 6 in den oberen Bereich des Gefässes, zwischen die Abdeckung und dem mit Wasser oder Nährflüssigkeit gefüllten unteren Bereich 2 eingeblasen werden. In einer bevorzugten Ausführungsform befindet sich der Ventilator 6 in einem Ansaugrohr 7, welches die Abdeckung durchstösst und als schalldämpfendes Element ausgestaltet sein kann. Das Ansaugrohr 7 kann nach oben verlängert werden. Dadurch wird z.B. Zigarettenqualm besser angesaugt. Das Rohr kann zudem als Kletterhilfe für Pflanzen 5 dienen. Im weiteren ist am topfförmigen Filtergehäuse 1, vorzugsweise in der Abdeckung 8 ein Wasserstandsanzeiger 9 und eine Wassereingussöffnung 9' angebracht. Wassereingussöffnung 9' und Wasserstandsandzeiger 9 können auch seitlich am topfförmiges Filtergehäuse 1 angeordnet werden. Um zu verhindern, dass Luft aus diesen Oeffnungen austreten kann, ist der Wasserstandsanzeiger 9 dichtend mit der Abdeckung 8 oder dem topfförmiges Filtergehäuse 1 verbunden und die Wassereinfüllöffnung 9' ist mit einem Rohr bis unter die Wasseroberfläche geführt, so dass dort keine Luft austreten kann. Die kann jedoch auch mit einem Rückschlagventil, z. B. einer Membrane, welche sie unter leichtem Ueberdruck im Gefäss verschliesst, versehen. Die Luft wird aus der Umgebung in Ansaugrichtung 41 vom Ventilator angesaugt, in den Bereich 2' über dem Wasser im topfförmign Filtergehäuse 1 geblasen. und nimmt dort Feuchtigkeit auf. Darauf wird sie von unten nach oben (43) durch die Filterelemente 3, damit durch die Aktivkohle und Substrat 4 geblasen, wobei sie gereinigt und von Schadstoffen befreit, und anschliessend wieder in Richtung 42 an die Umgebung abgegeben wird.

In Figur 2 ist ein einzelnes Filterelement 3, welches die Funktion eines Setztopfes für Pflanzen hat, perspektivisch dargestellt. Es besteht im wesentlichen aus einem formschlüssigen Haltestück 31 zur Aufnahme in der Abdeckung 8 und einer unten anschliessenden Filtertasche 32. das Haltestück ist vorzugsweise als Rohrstück 31 ausgebildet, dessen Boden 34 mit einem feinmaschigen Gitter, übergehend in eine oder mehrere Filtertaschen 32 abgeschlossen ist. Filtertasche 32 und Rohrstück 31 bilden zusammen ein Behältnis mit einer oberen Oeffnung 33. Jedes Filterelement 3 enthält eine oder mehrere Pflanzen 5 in einem Substrat 4 bestehend z. B. aus Aktivkohle und Tongranulat. Die Filtertaschen 32 tauchen, zwecks Versorgung des Substrates 4 mit Feuchtigkeit, teilweise ins Wasser. Sie können, je nach Feuchtigkeitsanspruch der Pflanzen 5, mehr oder weniger zusammengedrückt werden. Dadurch kann die Substratfeuchtigkeit reguliert werden. Die Filtertaschen 32 können jedoch auch mit einem unveränderbaren, beliebigen Querschnitt konstruiert sein, falls diese Reguliermöglichkeit nicht erwünscht ist. Sie passen spielfrei in die Aussparungen der dicht abschliessenden Abdeckung 8 des Gefässes 1. Der nicht ins Wasser eingetauchte Teil der Filterelemente 3 wird via Substrat 4 und Wurzelwerk mit Luft durchströmt. Der Austritt der Luft an der Substratoberfläche ist annähernd laminar, was verhindert, dass eventuell vorhandene Keime mitgerissen werden. Dabei könnem die Pflanzen über ihre Blätter und Wurzeln verschiedene Luftschadstoffe aufnehmen und metabolisieren. Mit Schadstoffen belastete Luft wird durch die Aktivkohle schnell absorbiert und diese mittels der Pflanzenwurzeln und Bodenbakterienflora durch sogenannte Bioregeneration langsam wieder regeneriert. Die Bodenbakterienflora ist zudem im Stande, eventuell anfallende pathogene Keime zu vernichten.

Der biologische Luftfilter entfernt auf diese Weise Staub aus der Luft und ist zudem im Stande, Luftschadstoffe, Keime und Gerüche zu einem grossen Teil in der Aktivkohle und/oder den Pflanzen biologisch abzubauen oder zu binden. Gleichzeitig nimmt die aktiv zirkulierende Luft einerseits von der Wasseroberfläche im Behälter, andererseits beim Durchströmen durch das Substrat, von diesem Feuchtigkeit auf. Somit findet ebenfalls eine Befeuchtung der Luft statt. Da die Filterelemente teilweise ins Wasser getaucht sind, wird laufend Wasser durch Wurzeln und Substrat nach oben nachgesogen, so dass trotz Luftzirkulation das Substrat nie austrocknet.

Als Pflanzen eignen sich übliche Zimmerpflanzen oder gewisse speziell zur Bioregeneration von bestimmten Schadstoffen geeignete Pflanzen. Als Beispiel sei die Gerbera jamesonii genannt, welche besonders viel mit Benzen oder Trichlorethylen belastete Luft zu reinigen imstande sind.

Der biologische Luftfilter eignet sich sicher sehr gut zur Verwendung in Büros und Wohnungen. Ein Einsatz ist aber auch an Arbeitsplätzen denkbar, wo stets in kleinen Mengen Lösungsmitteldämpfe frei werden (z.B. Labors, Arztpraxen, grafische Betriebe etc.).

Besondere Ausführungformen weisen weitere Optimierungen auf. Ein Wasserniveauschalter kann über ein Steuergerät mit dem Ventilator 6 gekoppelt sein. Dadurch wird erreicht, dass bei zu tiefem Absinken des Wasserstandes die Leistung des Ventilators 6 stufenlos reduziert wird bis der Ventilator 6 schliesslich ganz ausgeschaltet wird und sich das Gerät wie eine gewöhnliche Hydrokultur verhält.

Der Biologische Luftfilter kann auch an ein bestehendes Lüftungssystem angeschlossen werden. Dabei kann die Oeffnung zum Ansaugen resp. Einblasen der Luft auch seitlich am Filtergehäuse angeordnet sei. Diese Anordnung ist auch für die Wassereinfülloeffnung und den Wasserstandsanzeiger möglich.

Als Substrat eignet sich sowohl Topferde, wie Blähton und dergleichen, welche für optimale Wirkung nach Bedarf mit Aktivkohle vermengt werden. Eine eine Mischung von 2/3 Aktivkohle und 1/3 Tongranulat als optimal für bestimmte Arten von Pflanzen. Um die Oberfläche für den Luftdurchsatz zu vergrössern werden die Filtertaschen 32 mindestens teilweise harmonikaähnlich gefaltet oder schleifenartig gebogen geformt. Bei grösseren Anlagen wird der biologische Filter oder eine Anzahl biologischer Filter direkt an ein bestehendes Lüftungssystem angeschlossen. Im weiteren können am Gefäss Mittel zur Befestigung von Kletterstangen für Pflanzen und für Leuchten angebracht werden.

## Patentansprüche

1. Biologischer Luftfilter, bestehend aus einem topfförmigen Filtergehäuse (1) zur Aufnahme von Wasser und/oder Nährflüssigkeit und mindestens einem darin gehaltenen Filterelement (3), welches als Setztopf mit darin befindlichem Substrat (4) mindestens eine Pflanze (5) umfasst, sowie mit zu aktiver Luftzirkulation durch das Filterelement (3) dienenden Mitteln, wobei das topfförmige Filtergehäuse (1) eine dichtende Abdeckung (8) mit mindestens einer Halteöffnung (3') für das mindestens eine Filterelement (3), wobei das Filterelement (3) aus einem formstabilen Haltestück (31) mit nach unten anschliessender poriger, unverrotbarer Filtertasche (32), welche den Austausch von Luft und Wasser und/oder Nährflüssigkeit zulässt, besteht, aufweist.

2. Biologischer Luftfilter nach Anspruch 1, dadurch gekennzeichnet, dass die Filterelemente (3) teilweise in einen mit Wasser und/oder Nährflüssigkeit gefüllten unternen Bereich (2) des topfförmigen Filtergehäuses (1) hinunterreichen.

3. Biologischer Luftfilter nach einem der Ansprüche 1 bis 2, dadurch gekennzeichnet, dass das Substrat (4) Aktivkohle enthält.

4. Biologischer Luftfilter nach einem der Ansprüche 1 bis 3, dadurch gekennzeichnet, dass die Mittel zur aktiven Luftzikulation eine Oeffnung (7') und ein mit dieser zusammenwirkender Ventilator (6) ist.

5. Biologischer Luftfilter nach einem der Ansprüche 1 bis 4, dadurch gekennzeichnet, dass die Oeffnung (7') der aktiven Luftzirkulation in der Abdeckung (8) angebracht ist.

6. Biologischer Luftfilter nach einem der Ansprüche 1 bis 5, dadurch gekennzeichnet, dass der Ventilator (6) in einem Ansaugrohr (7), welches durch die Oeffnung (7') in der Abdeckung führt, angeordnet ist.

7. Biologischer Luftfilter nach einem der Ansprüche 1 bis 6, dadurch gekennzeichnet, dass das formstabile Haltestück (31) des Filterelementes (3) ein Rohrstück ist.

8. Biologischer Luftfilter nach Anspruch 1, dadurch gekennzeichnet, dass die Filtertaschen (32) harmonikaartig geformt sind.

9. Biologischer Luftfilter nach einem der Ansprüche 1 bis 8, dadurch gekennzeichnet, dass er einen verschliessbaren Einfüllstutzen (9') und/oder einen Wasserstandsanzeiger (9) aufweist.

10. Biologischer Luftfilter nach einem der Ansprüche 1 bis 9, dadurch gekennzeichnet, dass der Ventilator (6) durch den Wasserstandsanzeiger (9) mittels eines Steuergerätes in seiner Leistung steuerbar ist.

## Claims

1. A biological air filter, comprising a pot-shaped filter housing (1) for receiving water and/or nutrient fluid and at least one filter element (3) held therein which as a planting pot with the substrate (4) located therein surrounds at least one plant (5), as well as means providing active air circulation through the filter element (3), the pot-shaped filter housing (1) having a sealing cover (8) with at least one supporting opening (3') for the at least one filter element (3), the filter element (3) comprising a dimensionally stable carrier piece (31) connected with a downwardly extending porous, rot-resistant filter pocket (32), which allows an exchange of air and water and/or nutrient fluid.

2. A biological air filter according to claim 1, characterised in that the filter elements (3) partly extend down into a water and/or nutrient fluid-filled, lower area (2) of the pot-like filter housing (1).

3. A biological air filter according to one of the claims 1 and 2, characterised in that the substrate (4) contains activated charcoal.

4. A biological air filter according to one of the claims 1 to 3, characterised in that the means for the active air circulation is an opening (7') and a fan (6) cooperating therewtih.

5. A biological air filter according to one of the claims 1 to 4, characterised in that the active air circulation opening (7') is located in the cover (8).

6. A biological air filter according to one of the claims 1 to 5, characterised in that the fan (6) is located in a suction tube (7), which passes through the opening (7') in the cover.

7. A biological air filter according to one of the claims 1 to 6, characterised in that the dimensionally stable carrier piece (31) of the filter element (3) is a pipe section.

8. A biological air filter according to claim 1, characterised in that the filter pockets (32) have a harmonica shape.

9. A biological air filter according to one of the claims 1 to 8, characterised by a closable filler socket (9') and/or a water level indicator (9).

10. A biological air filter according to one of the claims 1 to 9, characterised in that the power of the fan (6) is controllable through the water level indicator (9) by means of a control device.

## Revendications

1. Filtre à air biologique, consistant en un corps de filtre (1) en forme de pot destiné à recevoir de l'eau et/ou un liquide nutritif et au moins un élément filtrant (3) maintenu dans ce corps, qui, en tant que pot de décantation dans lequel se trouve du substrat (4), comporte au moins une plante (5), ainsi que des moyens servant pour une circulation d'air active à travers l'élément filtrant (3), tandis que le corps de filtre en forme de pot (1) présente une couverture étanche (8) ayant au moins une ouverture de retenue (3') pour au moins un élément filtrant (3), tandis que l'élément filtrant (3) consiste en une pièce de soutien (31) stable en dimensions comportant à sa partie inférieure une poche filtrante (32) imputrescible, poreuse, débouchant vers le bas, qui permet l'échange d'air et d'eau et/ou de liquide nutritif.

2. Filtre à air biologique selon la revendication 1, caractérisé en ce que les éléments filtrants (3) plongent partiellement dans une zone inférieure (2) remplie d'eau et/ou de liquide nutritif du corps de filtre en forme de pot (1).

3. Filtre à air biologique selon l'une des revendications 1 ou 2, caractérisé en ce que le substrat (4) contient du charbon actif.

4. Filtre à air biologique selon l'une quelconque des revendications 1 à 3, caractérisé en ce que le moyen pour la circulation d'air active est une ouverture (7') et un ventilateur (6) coopérant avec celle-ci.

5. Filtre à air biologique selon l'une quelconque des revendications 1 à 4, caractérisé en ce que l'ouverture (7') de circulation d'air active est ménagée dans le couvercle (8).

6. Filtre à air biologique selon l'une quelconque des revendications 1 à 5, caractérisé en ce que le ventilateur (6) est placé dans un tube d'aspiration (7), qui mène par l'ouverture (7') dans le couvercle.

7. Filtre à air biologique selon l'une quelconque des revendications 1 à 6, caractérisé en ce que la pièce de soutien (31) stable en dimensions est un fragment de tube.

8. Filtre à air biologique selon la revendication 1, caractérisé en ce que les poches filtrantes (32) ont des formes d'harmonicas ou de soufflets.

9. Filtre à air biologique selon l'une quelconque des revendications 1 à 8, caractérisé en ce qu'il présente une tubulure de remplissage (9') obturable et/ou un indicateur du niveau de l'eau (9).

10. Filtre à air biologique selon l'une quelconque des revendications 1 à 9, caractérisé en ce que le ventilateur (6) peut être commandé par l'indicateur du niveau de l'eau (9), au moyen d'un appareil de commande.
